# EUROPÄISCHE PATENTSCHRIFT

(11) **EP 1 942 013 B1**
(45) Veröffentlichungstag und Bekanntmachung des Hinweises auf die Patenterteilung: **25.04.2012**
(21) Anmeldenummer: 07022834.1
(22) Anmeldetag: 26.11.2007
(51) Int. Cl.: B41M 7/02, C09D 133/08, C09D 135/06

(54) **Druckerzeugnis und Verfahren zu dessen Herstellung**
Printed product and method for its manufacture
Dispositif d'impression et procédé destiné à sa fabrication

(30) Priorität: 02.01.2007 DE 102007001330; 13.02.2007 DE 102007007596; 30.05.2007 DE 102007025308
(43) Veröffentlichungstag der Anmeldung: 09.07.2008
(73) Patentinhaber: Actega Terra GmbH, 31275 Lehrte (DE)
(72) Erfinder: Dickmann, Stefan, 29348 Eschede (DE); Kamphuis, Frank, 21535 Neustadt a. Rbge./Poggenhagen (DE)
(74) Vertreter: Säger, Manfred

(56) Entgegenhaltungen:
- EP-A1- 0 543 385
- EP-A1- 1 547 772
- EP-A2- 1 500 519
- WO-A2-2007/087531
- DE-A1- 4 336 214
- DE-U1- 20 020 799
- JP-A- 2005 329 584
- JP-A- 2006 241 345

## Beschreibung

Die Erfindung betrifft ein gattungsgemässes Druckerzeugnis, nämlich ein solches Druckerzeugnis aus einem Substrat, dessen Oberfläche mit einer UV-, Hybrid- oder sonstigen Druckfarbe als mit Bildern, Motiven oder dgl. bedruckter Bereich partiell bedruckt ist, wobei sich die an diesen nach aussen anschliessende Aussenseite des Druckerzeugnisses nebeneinander liegende, kontrastierende matte und glänzende Teilflächen aufweist und letztere von einem Lack gebildet ist. Hierbei können auch beide (vorder- und rückseitige) Oberflächen des Substrats bedruckt werden.

Die Erfindung betrifft desweiteren ein gattungsgemässes Verfahren zur Herstellung des Druckerzeugnisses, nämlich ein Druckverfahren zur Herstellung eines Druckerzeugnisses, wobei zunächst die Oberfläche eines Substrats, nämlich einer Druckbahn oder eines Druckbogens mit einer UV-, Hybrid oder sonstigen Druckfarbe als mit Bildern, Motiven oder dgl. bedruckter Bereich partiell bedruckt und danach als letzter Verfahrensschritt zur Erzeugung von kontrastierenden, nebeneinander liegenden matten und glänzenden Teilflächen vollflächig ein Lack aufgetragen wird. Es kommen insbesondere Tief-, Flexo-, Digital-, Rollen- und Bogenoffsetdruckverfahren, letzters auch mit Wendung des Bogens und beidseitiger Bedruckung sowie Lackierung in einem einzigen Arbeitsgang in Betracht.

Mit dem gattungsgemässen Druckerzeugnis und dem Verfahren zu dessen Herstellung wird ein sogenannter Spotlackierungseffekt mit einem drip-off Verfahren bewirkt, bei welchem eine Teilfläche der Aussenseite des Druckerzeugnisses mit einem Mattlack lackiert wird und damit matt ist, wohingegen die daneben liegende, dazu kontrastierende glänzende Teilfläche mittels eines Lackes gebildet wird. Zwar wird dieser vollflächig, also auch über den Mattlack aufgetragen, von dem er aber aufgrund dessen Beschaffenheit quasi abperlt (drip-off) bzw. resorbiert wird, so dass er in den Bereichen des Mattlacks seine Glanzeigenschaften nicht ausbilden kann, dort also der matte Glanz dominiert.

Durch die unterschiedliche Oberflächenbeschaffenheit der matten und glänzenden Teilfläche(n) der Aussenseite des Druckerzeugnisses ergibt sich zwischen diesen benachbarten Teilflächen ein Kontrast, wodurch man beispielsweise unterschiedliche Farben des Motivs stärker voneinander abheben und dem matten Teilflächen ein samtiges Aussehen sowie den glänzenden lackierten Teilflächen ein spiegelndes, z.B. silbriges oder goldenes Aussehen verleihen oder auch andere ansprechende optische Effekte erzielen kann.

Es ist ein gattungsgemässes Druckerzeugnis sowie ein Verfahren zu dessen Herstellung unter Erzielung eines Kontrastes zwischen unterschiedlichen, benachbarten matten sowie glänzenden Teilflächen bekannt (DE 103 60 050 B3). Allerdings benötigt man hierzu den -partiellen- Auftrag eines Mattlacks, was nicht nur aufwändig ist und einen extra Arbeitsgang bedingt, sondern es wird auch ein Druckwerk für den eigentlichen Auftrag der Druckfarbe für den Mattlack blockiert, auf den dann der Glanzlack vollflächig mittels des Lackwerks als letztem Verfahrensschritt aufgetragen wird.

Weiterhin offenbart die DE20020799U ein Druckverfahren zur Herstellung eines Druckerzeugnisses mit unterschiedlichen Glanzgraden, wobei durch Aufbringen einer Farbschicht ein Druckbild auf einem Bedruckstoff erzeugt wird, wobei mindestens zwei verschiedene Farbsysteme verwendet werden, die hinsichtlich ihrer Lack-Resorptionsfähigkeit voneinander abweichen, und das Druckbild anschliessend ganzflächig mit einem Lack beschichtet wird, wobei jedes Farbsystem in Zusammenwirken mit der Lackschicht deren Glanzgrad spezifisch verändert. Auch ein nach diesem Druckverfahren hergestelltes Druckerzeugnis wird offenbart.

Der Erfindung liegt die Aufgabe zugrunde, ein einfacheres Druckerzeugnis sowie Verfahren zu dessen Herstellung unter Beibehaltung der durch die Spotlackierung bewirkten Effekte vorzuschlagen.

Diese Aufgabe wird durch die Gegenstände der nebengeordneten unabhängigen Ansprüche betreffend das Druckerzeugnis, und das Verfahren zu dessen Herstellung durch deren kennzeichnende Merkmale.

Nach Lehre der Erfindung wird also zwar der -erfindungsgemäss stets transparente farblose- Lack, vorzugsweise Glanzlack auch auf den nicht bedruckten Bereich, also vollflächig aufgebracht; nachdem es sich dort um eine rauhe und/oder saugende Oberfläche des seiden- oder mattgestrichenen Papiers oder der gestrichenen Kartonage handelt, sinken die Inhaltsstoffe des Lackes von der Oberfläche ab und penetrieren ins Innere des Substrats weitestgehend ein, so dass die optischen Eigenschaften, insbesondere die Reflexion an der Oberfläche des dort aufgetragenen Lackes etwa jenen der unlackierten Oberfläche des unbedruckten Bereichs entsprechen; infolgedessen stellt sich bei den erfindungsgemäss zu verwendenden Substraten trotz Auftrags des glänzenden Lacks eine matte Teilfläche ein. Damit dies möglich ist, muss mit Hinblick auf das zu druckende Motiv nur sichergestellt werden, dass der von den Druckfarben nicht bedruckte (unbedruckte) Bereich die matte Teilfläche bildet. Auf den Druckfarben ist das Eindringen des aufgetragenen Lacks nicht möglich, weshalb durch dessen optimales Aufliegen auf der Druckfarbe die glänzende Teilfläche erzeugt wird.

Mit der Erfindung werden also mit einem einzigen Verfahrensschritt, dem Auftrag des Lacks, zwei Effekte bewirkt, nämlich einerseits die glänzende Teilfläche, andererseits die daneben angeordnete, dazu kontrastierende matte Teilfläche erzielt, was bei Anwendung des Druckverfahrens zwar wie beim Stand der Technik ein Lackwerk für den vollflächigen Auftrag von Lack erfordert, aber den Auftrag von Mattlack grundsätzlich entbehrlich macht, so dass hierfür kein extra Druckwerk für den Auftrag von Druckfarbe freigehalten werden muss. Somit kann das erfindungsgemässe Druckerzeugnis auf jeder ein oder mehrere Lackwerke für den letzten Verfahrensschritt aufweisenden Druckmaschine, gleichgültig, wieviele Druckwerke installiert sind, unter Anwendung des erfindungsgemässen -das neue Druckerzeugnis hervorbringene- Herstellungsverfahrens, hergestellt werden.

Besonders gute Ergebnisse mit stark kontrastierenden matten sowie glänzenden Teilflächen erhält man bei Ausübung des Verfahrens, wenn als Lack ein solcher verwendet wird, der aufweist: eine wässrige Dispersion von Acryl-Copolymer oder Acrylat-Styrol-Copolymer mit einem Molekulargewicht von Grösser als 200.000 in einem Bereich zwischen 45-85, vozugsweise 50-70 Gew.%; Harze, vorzugsweise Festharze im Bereich von 0,1-8, vorzugsweise 0,5-6 Gew.%; Netzmittel im Bereich von 1-10, vorzugsweise 2-8 und am besten 3-7 Gew.%; Entschäumer im Bereich von 0,01-1 Gew.%; Wachs im Bereich von 1-6, vorzugsweise 2-5 und am besten 2,5-4 Gew.% und als Rest Wasser aufweist. Stattdessen oder zusätzlich kann auch nur zwischen dem mit der Druckfarbe partiell bedruckten Bereich des Substrats und der von dem Lack gebildeten glänzenden Teilfläche(n) der Aussenseite des Druckerzeugnisses ein transparenter Öldrucklack bzw. Primer angeordnet werden. Dabei weisen der mit der Druckfarbe partiell bedruckte Bereich des Substrats und der mit dem transparenten Öldrucklack bzw. Primer bedruckte Bereich einen deckungsgleichen Umriss auf und sind deckungsgleich übereinander angeordnet; es wird also bei dem Verfahren vor dem Aufbringen der die Aussenseite des Druckerzeugnisses bildenden Lackes und nach dem Bedrucken mit der Druckfarbe nur dieser Bereich mit einem transparenten Öldrucklack bzw. Primer bedruckt.

Dieser Lack trocknet schnell, weist eine hohe Blockfestigkeit auf und ist sowohl für die einseitie als auch die zweiseitige Lackierung des Substrats geeignet.

Zweckmässigerweise sind die Netzmittel als Sulfonsuccinatharze, die Entschäumer als Silikone, vorzugsweise mit einem Molekulargewicht von grösser 1000 ausgebildet.

Weitere zweckmässige Ausgestaltungen und Weiterbildungen der Erfindung sind in den restlichen Unteransprüchen gekennzeichnet.

Ein Ausführungsbeispiel des Druckverfahrens gemäss der Erfindung wird nachfolgend unter Bezugnahme auf die Zeichnung näher erläutert. In dieser zeigt:
- Figur 1: eine Druckmaschine, in schematischer Seitenansicht;
- Figur 2: ein erfindungsgemässes Druckerzeugnis, in Draufsicht;
- Figur 3: einen Schnitt III-III gemäss Figur 2 und
- Figur 4: die Einzelheit IV gemäss Figur 3.

Die insgesamt mit 1 bezeichnete Druckmaschine weist sechs in Transportrichtung 3 des Substrats 4 hintereinander angeordnete Druckwerke 2, mittels dem hintereinander je eine Druckfarbe, z.B. UV,-, Hybrid oder sonstige Druckfarbe aufgedruckt wird, sowie geeignete Trocknungsaggregate auf. Am in Transportrichtung 3 hinteren Ende der Druckmaschine 1 ist ein als Walzenlackiersystem ausgebildetes Lackwerk 5 für den vollflächigen Auftrag eines erfindungsgemäss stets transparenten farblosen Lacks angeordnet, wonach das Substrat 4 zu -hier nicht interessierenden- weiteren Arbeitsstationen 6 transportiert wird.

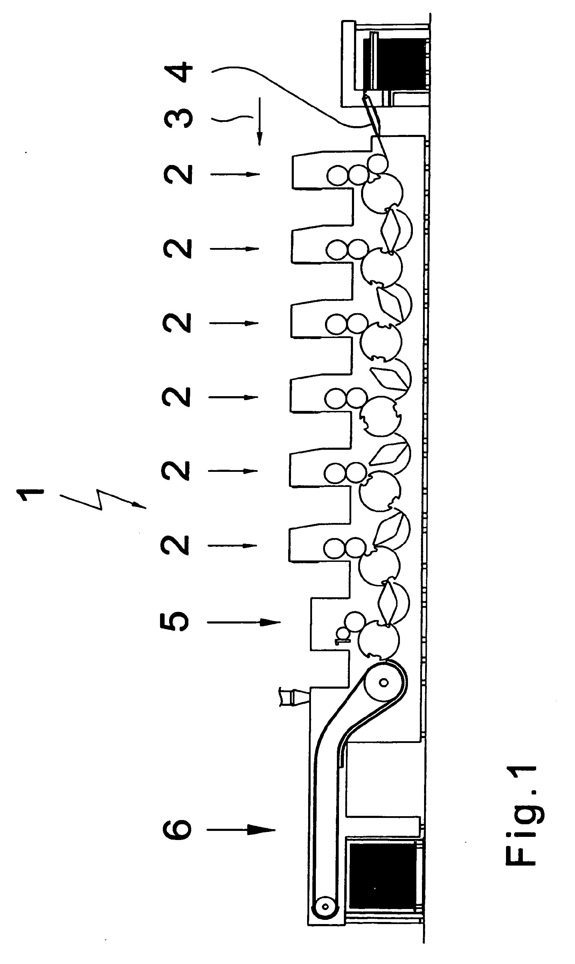

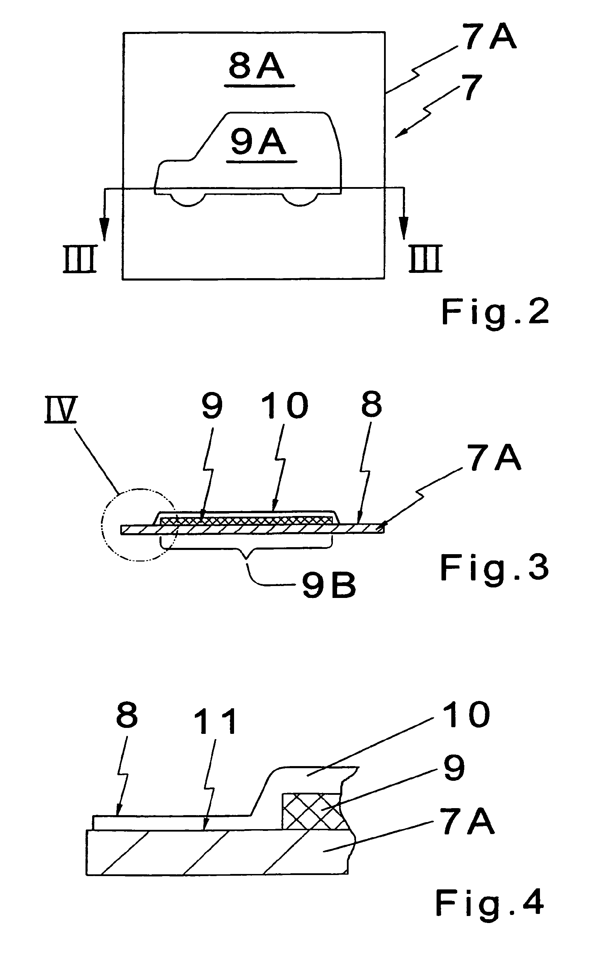

Figur 2 zeigt ein auf der in Figur 1 gezeigten Druckmaschine 1 nach dem erfindungsgemässen Druckverfahren hergestelltes Druckerzeugnis 7. Dieses weist ein Substrat 7A auf, dessen Oberfläche 11 (Figur 4) mit einer UV-, Hybrid oder sonstigen Druckfarbe 9 als mit Bildern, Motiven oder dgl. bedruckter Bereich 9B (Figur 3) partiell bedruckt ist, wobei die Aussenseite 8 des Druckerzeugnisses nebeneinander liegende, kontrastierende matte (8A) und glänzende Teilflächen (9A) aufweist und letztere von einem Lack 10 gebildet ist.

Das Substrat 7A ist hierbei nach Lehre der Erfindung als glänzend-, seiden- oder mattgestrichenes Papier oder gestrichene Kartonage ausgebildet. Der von der Druckfarbe 9 bedruckte Bereich 9B und die von dem Lack 10 gebildete glänzende(n) Teilfläche(n) 9A der Aussenseite 8 des Druckerzeugnisses weisen einen deckungsgleichen Umriss auf und sind deckungsgleich direkt übereinanderliegend angeordnet. Auf den Druckfarben 9 ist das Eindringen des aufgetragenen Lacks 10 nicht möglich, weshalb durch dessen optimales Aufliegen auf der Druckfarbe die glänzende Teilfläche 9A erzeugt wird.

Auf den nicht mit Druckfarbe 9 bedruckten Bereich der Oberfläche 11 des Substrats 7A ist zwar, wie Figur 4 zeigt, auch der Lack 10 aufgetragen; nachdem es sich dort um eine rauhe und/oder saugende Oberfläche 11 des glänzend-, seiden- oder mattgestrichenen Papiers oder der gestrichenen Kartonage als Substrat 7A handelt, sinken die Inhaltsstoffe des Lackes 10 von der Oberfläche 11 des Substrats 7A ab und penetrieren in dessen Inneres weitestgehend ein, so dass die optischen Eigenschaften, insbesondere die Reflexion an der Oberfläche 8 des dort aufgetragenen Lackes 10 etwa jenen der unlackierten Oberfläche 11 des unbedruckten Bereichs entsprechen; infolgedessen stellt sich bei den erfindungsgemäss zu verwendenden Substraten 7A trotz Auftrags des glänzenden Lacks 10 eine matte Teilfläche 8A ein. Damit dies möglich ist, muss mit Hinblick auf das zu druckende Motiv nur sichergestellt werden, dass der von den Druckfarben nicht bedruckte (unbedruckte) Bereich die matte Teilfläche bildet.

### Beispiel für die Herstellung eines Druckerzeugnisses:

Es wurde auf einer Druckmaschine (MAN Roland 900) mit sechs in Transportrichtung 3 des Substrats 4 hintereinander angeordneten Druckwerken 2 ein Bogen aus einem mattgestrichenen Papier mit einer Druckfarbe bedruckt. An der letzten Arbeitsstation der Druckmaschine wird von dem Lackwerk 5 erfindungsgemäss vollflächig der transparente farblose Glanzlack sowohl auf den bedruckten als auch nicht bedruckten Bereich aufgetragen, der nach 50 s getrocknet war. Der Lack war dabei wie folgt zusammengesetzt:

| | |
|---|---|
| -Acrylat-Copolymer mit Molgew. 200.000 (in wässriger Dispersion): | 75 Gew.% |
| -Acryl-COpolymer mit Molgew. 10.000 Festharz | 1 Gew.% |
| Netzmittel | 4 Gew.% |
| Wachse | 3 Gew.% |
| Entschäumer | 0,2 Gew.% |
| Wasser | 15 Gew.% |
| Rest: Alkohole, Glykole, Melaminharz-Formaldehydharz | |

Die Messung der Glanzwerte (mit 60° Lichteinfalls-und -ausfallwinkel Messgeometrie) ergab folgendes:

| | |
|---|---|
| bedruckter Bereich | 60 Glanzpunkte |
| unbedruckter Bereich | 10 Glanzpunkte |
| Differenz zwischen bedrucktem und unbedrucktemBereich | 35 Glanzpunkte |

## Patentansprüche

1. Druckerzeugnis (7) aus einem Substrat (7A), dessen Oberfläche (11) mit einer Druckfarbe (9) als mit Bildern, Motiven bedruckter Bereich (9B) bedruckt ist, wobei die Aussenseite (8) des Druckerzeugnisses nebeneinander liegende, kontrastierende matte (8A) und glänzende Teilflächen (9A) aufweist und letztere von einem vollflächig aufgetragenen Lack (10) gebildet sind, **dadurch gekennzeichnet, dass** das Substrat eine rauhe und/oder saugende Oberfläche aufweist und als gussgestrichenes, glänzend-, seiden- oder mattgestrichenes Papier oder gestrichene Kartonage ausgebildet ist, dass der von der Druckfarbe (9) partiell bedruckte Bereich (9B) und die von dem Lack (10) gebildeten glänzenden Teilflächen (9A) der Aussenseite (8) des Druckerzeugnisses (7) einen deckungsgleichen Umriss aufweisen sowie deckungsgleich übereinander angeordnet sind, dass der von der Druckfarbe (9) nicht bedruckte Bereich der Oberfläche (11) des Substrats (7A) das Absinken und weitestgehende Penetrieren der Inhaltsstoffe des Lackes (10) von der Oberfläche ins Innere des Substrats unter Bildung der matten Teilflächeln (8A) erlaubt und dass der von der Druckfarbe nicht beckuckte Bereich und die matten Teilflächen der Aussenseite (8) des Druckerzeugnisses (7) einen deckungsgleichen Umriss aufweisen sowie deckungsgleich zueinander angeordnet sind.

2. Druckerzeugnis nach einem der Anspruche 1, **dadurch gekennzeichnet, dass** der Lack ein Glanzlack ist.

3. Druckerzeugnis nach einem der Ansprüche 1 bis 2, **dadurch gekennzeichnet, dass** der Lack aufweist:
- Dispersion von Acryl-Copolymer oder Acrylat-Styrol-Copolymer mit einem Molekulargewicht von Grösser als 200.000 in einem Bereich zwischen 45-85, vozugsweise 50-70 Gew.%;
- Harze, vorzugsweise Festharze im Bereich von 0,1-8, vorzugsweise 0,5-6 Gew.%;
- Netzmittel im Bereich von 1-10, vorzugsweise 2-8 und am besten 3-7 Gew.%;
- Entschäumer im Bereich von 0,01-1 Gew.%;
- wachs im Bereich vorn.1-6, vorzugsweise 2-5 und am besten 2,5-4 Gew.%
- aufweist.

4. Druckerzeugnis nach Anspruch 3, **dadurch gekennzeichnet, dass** die Netzmittel als Sulfonsuccinatharze oder als basierte Polyether ausgebildet sind.

5. Druckerzeugnis nach Anspruch 4, **dadurch gekennzeichnet, dass** den Netzmitteln Alkohole und Glykole zugesetzt sind.

6. Druckerzeugnis nach Anspruch 3, **dadurch gekennzeichnet, dass** die Entschäumer als Silikone ausgebildet sind.

7. Druckerzeugnis nach Anspruch 6, **dadurch gekennzeichnet, dass** die Silikone als Entschäumer und/oder Verlaufsmittel je ein Molekulargewicht von grösser 1000 aufweisen.

8. Druckerzeugnis nach Anspruch 3, **dadurch gekennzeichnet, dass** die Festharze Acryl-Copolymer oder Acrylat-Styrol-Copolymer mit einem Molekulargewicht zwischen 1.000-40.000 aufweisen.

9. Druckerzeugnis nach Anspruch 3, **dadurch gekennzeichnet, dass** die Harze als Melaminharze und/oder Naturharze ausgebildet sind.

10. Druckerzeugnis nach Anspruch 9, **dadurch gekennzeichnet, dass** der Lack ausserdem noch ggf. methylverethertes Melaminharz-Formaldehydharz aufweist.

11. Druckerzeugnis nach einem der Ansprüche 1 bis 10, **dadurch gekennzeichnet, dass** der Lack ausserdem Neutralisationsmittel aufweist.

12. Druckerzeugnis nach Anspruch 11, **dadurch gekennzeichnet, dass** Amine- bzw. Ammoniak-Neutralisationsmittel vorgesehen sind.

13. Druckerzeugnis nach einem der vorangehenden Ansprüche, **dadurch gekennzeichnet, dass** nur zwischen dem mit der Druckfarbe partiell bedruckten Bereich des Substrats und der von dem Lack gebildeten glänzenden Teilfläche(n) der Aussenseite des Druckerzeugnisses ein transparenter Öldrucklack bzw. Primer angeordnet ist.

14. Druckerzeugnis nach Anspruch 13, **dadurch gekennzeichnet, dass** der mit der Druckfarbe partiell bedruckte Bereich des Substrats und der mit dem transparenten Öldrucklack bzw. Primer bedruckte Bereich einen deckungsgleichen Umriss aufweisen sowie deckungsgleich übereinander angeordnet sind.

15. Druckverfahren zur Herstellung eines Druckerzeugnisses (7), wobei zunächst die Oberfläche (11) eines Substrats (7A), nämlich einer Druckbahn oder eines Druckbogens mit einer UV-, Hybrid oder sonstigen Druckfarbe (9) als mit Bildern, Motiven bedruckter Bereich (9B) bedruckt und danach als letzter Verfahrensschritt zur Erzeugung von kontrastierenden, nebeneinander liegenden matten (8A) und glänzenden (9B) Teilflächen vollflächig ein Lack (10) aufgetragen wird, **dadurch gekennzeichnet, dass** als ein eine rauhe und/oder saugende Oberfläche aufweisendes Substrat (7A) ein glänzendes, seiden- oder mattgestrichenes Papier oder eine saugende gestrichene Kartonage eingesetzt wird, dass nach dem partiellen Bedrucken des Teilbereichs (9B) mit der Druckfarbe (9) vollflächig der Lack (10) aufgebracht wird, so dass der auf den von der Druckfarbe (9) bedruckten Bereich (9B) vollständig und direkt aufgebrachte Lack (10) die glänzenden Teilflächen (9A) der Aussenseite (8) des Druckerzeugnisses (7) und der auf den von der Druckfarbe (9) nicht bedruckten Bereich das Absinken und weitestgehende Penetrieren der Inhaltsstoffe des Lackes (10) ins Innere des Substrats (7A) erlaubenden Oberfläche (11) vollständig und direkt aufgebrachte Lack (10) die matten Teilflächen (8A) bildet.

16. Verfahren nach Anspruch 15, **dadurch gekennzeichnet, dass** sich an den Auftrag der letzten Druckfarbe des bedruckten Bereichs unmittelbar und als letzter Vefahrensschritt der Auftrag des Lacks anschliesst.

17. Verfahren nach Anspruch 15, **dadurch gekennzeichnet, dass** vor dem Aufbringen der die Aussenseite des Druckerzeugnisses bildenden Lackes und nach dem Bedrucken mit der Druckfarbe nur dieser Bereich mit einem transparenten Öldrucklack bzw. Primer bedruckt wird.

## Claims

1. A printed product (7) comprising a substrate (7A), of which the surface (11) is printed with a printing ink (9) as a region (9B) printed with images or motifs, wherein the external side (8) of the printed product provides contrasting matt (8A) and gloss sub-regions (9A) disposed side-by-side, and the latter are formed by a varnish (10) applied over the full surface,
**characterised in that**
the substrate provides a rough and/or absorbent surface and is embodied as a cast-coated, gloss, silk-coated or matt-coated paper or coated card,
that the region (9B) partially printed with the printing ink (9) and the gloss sub-regions (9A) of the external side (8) of the printed product (7) formed by the varnish (10) provide a congruent perimeter and are arranged one above the other in a congruent manner, that the region of the surface (11) of the substrate (7A) not printed with the printing ink (9) allows the ingredients of the varnish (10) to sink down and penetrate as far as possible from the surface into the interior of the substrate forming the matt sub-regions (8A) and
that the region not printed with the printing ink and the matt sub-region of the external side (8) of the printed product (7) provide a congruent perimeter and are arranged relative to one another in a congruent manner.

2. The printed product according to claim 1,
**characterised in that**
the varnish is a gloss varnish.

3. The printed product according to any one of claims 1 to 2,
**characterised in that**
the varnish comprises:
- a dispersion of acrylic copolymer or styrene-acrylate copolymer with a molecular weight greater than 200,000, within a range between 45-85, preferably 50-70% by weight;
- resins, preferably solid resins, within a range from 0.1-8, preferably 0.5-6% by weight;
- wetting agent, within a range from 1-10, preferably 2-8, by greatest preference 3-7% by weight;
- anti-foaming agent, within a range from 0.01-1% by weight;
- wax, within a range from 1-6, preferably 2-5 and by greatest preference 2.5-4% by weight.

4. The printed product according to claim 3,
**characterised in that**
the wetting agents are embodied as sulfonic-succinate resins or as basic polyethers.

5. The printed product according to claim 4,
**characterised in that**
alcohols and glycols are added to the wetting agents.

6. The printed product according to claim 3,
**characterised in that**
the anti-foaming agents are embodied as silicones.

7. The printed product according to claim 6,
**characterised in that**
the silicones as anti-foaming agents and/or flow-control agents each provide a molecular weight greater than 1000.

8. The printed product according to claim 3,
**characterised in that**
the solid resins provide acrylic copolymer or styrene-acrylate copolymer with a molecular weight between 1000-40,000.

9. The printed product according to claim 3,
**characterised in that**
the resins are embodied as melamine resins and/or natural resins.

10. The printed product according to claim 9,
**characterised in that**
the varnish also provides optionally methyl-etherified melamine-formaldehyde resin.

11. The printed product according to any one of claims 1 to 10,
**characterised in that**
the varnish further provides neutralisation agents.

12. The printed product according to claim 11,
**characterised in that**
amine and/or ammonia neutralisation agents are provided.

13. The printed product according to any one of the preceding claims,
**characterised in that**
a transparent oil-based varnish or primer is arranged only between the region of the substrate partially printed with the printing ink and the gloss sub-region(s) of the external side of the printed product formed by the varnish.

14. The printed product according to claim 13,
**characterised in that**
the region of the substrate partially printed with the printing ink and the region printed with the transparent oil-based varnish or primer provide a congruent perimeter and are arranged one above the other in a congruent manner.

15. A printing method for manufacturing a printed product (7), wherein initially the surface (11) of a substrate (7A), namely a printed web or a printed sheet is printed with a UV, hybrid or other printing ink (9) as a printed region printed with images or motifs, and following this, as the last method step, a varnish (10) is applied over the full surface in order to provide contrasting matt (8A) and gloss (9B) sub-regions disposed side-by-side,
**characterised in that**
a gloss, silk-coated or matt-coated paper or an absorbent coated card is used as a substrate (7A) providing a rough and/or absorbent surface,
that after the partial printing of the sub-region (9B) with the printing ink (9), the varnish (10) is applied over the full surface, so that the varnish (10) applied directly and over the full surface on the region (9B) printed with the printing ink (9) forms the gloss sub-regions (9A) of the external side (8) of the printed product (7), and the varnish (10) applied over the full surface and directly on the surface (11) not printed with the printing ink (9) allowing the ingredients of the varnish (10) to sink down and penetrate as far as possible into the interior of the substrate (7A) forms the matt sub-regions (8A).

16. The method according to claim 15,
**characterised in that**
the application of the varnish follows directly after the application of the last printing ink of the printed region as the last method step.

17. The method according to claim 15,
**characterised in that**,
before the application of the varnish forming the exterior side of the printed product and after the printing with the printing ink, only this region is printed with a transparent oil-based varnish or primer.

## Revendications

1. Imprimé (7) constitué d'un substrat (7a) dont la surface (11) est imprimée par une encre (9) en tant que zone (9B) imprimée par des images, des motifs, la face extérieure (8) de l'imprimé comprenant des surfaces partielles (9A) juxtaposées, mates contrastantes (8A) et brillantes et ces dernières étant formées par un vernis (10) appliqué sur toute la surface, **caractérisé en ce que** le substrat présente une surface rugueuse et/ou aspirante et est réalisé comme un papier couché à haute brillance, brillant, soyeux ou mat ou un cartonnage couché, **en ce que** la zone (9B) partiellement imprimée par l'encre (9) et la surface partielle brillante (9A), formée par le vernis (10), de la face extérieure (8) de l'imprimé (7) présentent un contour congruent et sont superposées de manière congruente, **en ce que** la zone de la surface (11) du substrat (7A) non imprimée par l'encre (9) permet la subsidence et la pénétration la plus étendue des composants du vernis (10) de la surface à l'intérieur du substrat avec formation de la surface partielle mate (8A) et **en ce que** la zone non imprimée par l'encre et les surfaces partielles mates de la face extérieure (8) de l'imprimé (7) présentent un contour congruent et sont disposées de manière congruente les unes par rapport aux autres.

2. Imprimé selon la revendication 1, **caractérisé en ce que** le vernis est un vernis brillant.

3. Imprimé selon l'une quelconque des revendications 1 à 2, **caractérisé en ce que** le vernis comprend :
- une dispersion de copolymère acrylique ou de copolymère acrylate-styrène doté d'un poids moléculaire supérieur à 200 000 dans une plage comprise entre 45 et 85, de préférence entre 50 et 70 % en poids ;
- une résine, de préférence une résine solide dans la plage de 0,1 à 8, de préférence de 0,5 à 6 % en poids ;
- des agents mouillants dans la plage de 1 à 10, de préférence de 2 à 8 et idéalement de 3 à 7 % en poids ;
- des anti-moussants dans la plage de 0,01 à 1 % en poids ;
- de la cire dans la plage de 1 à 6, de préférence de 2 à 5 et idéalement de 2,5 à 4 % en poids.

4. Imprimé selon la revendication 3, **caractérisé en ce que** les agents mouillants sont réalisés comme des résines de sulfonsuccinate ou à base de polyéthers.

5. Imprimé selon la revendication 4, **caractérisé en ce que** des alcools et des glycols sont ajoutés aux agents mouillants.

6. Imprimé selon la revendication 3, **caractérisé en ce que** les anti-moussants sont réalisés comme des silicones.

7. Imprimé selon la revendication 6, **caractérisé en ce que** les silicones en tant qu'anti-moussants et/ou agents d'écoulement présentent respectivement un poids moléculaire supérieur à 1000.

8. Imprimé selon la revendication 3, **caractérisé en ce que** la résine solide comprend un copolymère acrylique ou un copolymère acrylate-styrène doté d'un poids moléculaire compris entre 1 000 et 40 000.

9. Imprimé selon la revendication 3, **caractérisé en ce que** les résines sont réalisées comme des résines mélaminiques et/ou des résines naturelles.

10. Imprimé selon la revendication 9, **caractérisé en ce que** le vernis comprend en outre encore éventuellement de la résine mélamine-formaldéhyde éthérifiée par du méthyle.

11. Imprimé selon l'une quelconque des revendications 1 à 10, **caractérisé en ce que** le vernis comprend en outre des agents de neutralisation.

12. Imprimé selon la revendication 11, **caractérisé en ce que** des agents de neutralisation à l'amine et ou à l'ammoniaque sont prévus.

13. Imprimé selon l'une quelconque des revendications précédentes, **caractérisé en ce qu'**un vernis de surimpression transparent ou une couche de fond n'est disposé(e) qu'entre la zone du substrat imprimée partiellement par l'encre et la ou les surfaces partielles brillantes de la face extérieure de l'imprimé formées par le vernis.

14. Imprimé selon la revendication 13, **caractérisé en ce que** la zone du substrat imprimée partiellement par l'encre et la zone imprimée par le vernis de surimpression transparent ou la couche de fond présentent un contour congruent ou sont superposés de manière congruente.

15. Procédé d'impression destiné à fabriquer un imprimé (7), la surface (11) d'un substrat (7A), à savoir d'une bande d'impression ou d'une feuille d'impression étant tout d'abord imprimée au moyen d'une encre UV, d'une encre hybride ou d'une autre encre (9) en tant que zone (9B) imprimée avec des images, des motifs puis, en tant que dernière étape de production de surfaces partielles contrastantes, juxtaposées, mates (8A) et brillantes (9B), un vernis (10) étant appliqué sur toute la surface, **caractérisé en ce qu'**un papier couché brillant, soyeux ou mat ou un cartonnage couché est utilisé comme un substrat (7A) comprenant une surface rugueuse et/ou aspirante, **en ce qu'**après l'impression partielle de la zone partielle (9B) avec l'encre (9), le vernis (10) est appliqué sur toute la surface, de sorte que le vernis (10) appliqué sur toute la surface et directement sur la zone (9B) imprimée par l'encre (9) forme la ou les surfaces partielles brillantes (9A) de la face extérieure (8) de l'imprimé (7) et le vernis (10) appliqué sur toute la surface et directement sur la zone non imprimée par l'encre (9) sur la surface (11) permettant la subsidence et la pénétration très étendue des composants du vernis (10) à l'intérieur du substrat (7A) forme les surfaces partielles mates (8A).

16. Procédé selon la revendication 15, **caractérisé en ce que** l'application du vernis fait immédiatement suite en tant que dernière étape de procédé à l'application de la dernière couche d'encre de la zone imprimée.

17. Procédé selon la revendication 15, **caractérisé en ce qu'**avant l'application du vernis formant la face extérieure de l'imprimé et après l'impression avec l'encre, seule cette zone est imprimée avec un vernis de surimpression transparent ou une couche de fond.
